# EUROPEAN PATENT SPECIFICATION

(11) **EP 3 651 250 B1**
(45) Date of publication and mention of the grant of the patent: **05.06.2024**
(21) Application number: 19207571.1
(22) Date of filing: 07.11.2019
(51) Int. Cl.: H01M 10/052, H01M 10/0562, H01B 1/08

(54) **COMPOSITE STRUCTURE, LITHIUM BATTERY, AND METHOD OF PRODUCING COMPOSITE STRUCTURE**
VERBUNDSTRUKTUR, LITHIUMBATTERIE UND VERFAHREN ZUR HERSTELLUNG EINER VERBUNDSTRUKTUR
STRUCTURE COMPOSITE, BATTERIE AU LITHIUM ET PROCÉDÉ DE PRODUCTION D'UNE STRUCTURE COMPOSITE

(30) Priority: 09.11.2018 JP 2018211307
(43) Date of publication of application: 13.05.2020
(73) Proprietor: TOYOTA JIDOSHA KABUSHIKI KAISHA, Toyota-shi, Aichi 471 8571 (JP)
(72) Inventor: OHTA, Shingo, Nagakute-shi, Aichi 480-1192 (JP); WATANABE, Masaki, Toyota-shi, Aichi 471-8571 (JP); HOJO, Yasutoshi, Toyota-shi, Aichi 471-8571 (JP)
(74) Representative: TBK

(56) References cited:
- EP-A1- 3 252 024
- EP-A1- 3 621 130
- WO-A1-2018/075809
- US-A1- 2015 111 110
- US-A1- 2018 175 446

## Description

### BACKGROUND OF THE INVENTION

### 1. Field of the Invention

The present disclosure relates to a lithium battery comprising a composite structure, and a method of producing a composite structure.

### 2. Description of Related Art

In the related art, regarding a solid electrolyte, a garnet ion conductive oxide containing Li, La and Zr has been proposed as a solid electrolyte (for example, refer to Journal of Power Sources, 363: 145-152, September 2017·with·92 Reads). In Journal of Power Sources, 363: 145-152, September 2017·with·92 Reads, in a garnet solid electrolyte, growth of lithium during charging causes a problem and there is a risk of short circuiting. However, a higher critical current density is exhibited by modifying grain boundaries of pellets with Li₂CO₃ and LiOH.
US 2015/111110 A1 discloses a solid electrolyte having a sheet shape, and being composed of an oxide sintered body. The solid electrolyte includes a layer-shaped dense portion whose sintered density is 90% or more, and a porous portion formed on a superficial side of the solid electrolyte so as to be continuous from at least one of opposite surfaces of the dense portion, and having a porosity of 50% or more. Further, a secondary battery which includes a positive electrode and a negative electrode is disclosed, the positive electrode and negative electrode arranged at opposite facing positions interposing the solid electrolyte.
A garnet-type oxide sintered body according to US 2018/175446 A1 includes crystal grains composed of a garnet-type oxide containing Li, La and Zr and a grain boundary composition containing boron and silicon and filling gaps between the crystal grains. The oxide sintered body has the characteristics of high density and high ion conductivity. A production method of the sintered body according to US 2018/175446 A1 includes a step of providing a precursor material by mixing a garnet-type oxide powder containing Li, La and Zr with a sintering aid; a step of forming the precursor material into a formed body; and a sintering step of sintering the formed body. The sintering aid contains oxygen, boron, silicon and lithium. The oxygen and boron, or the oxygen and silicon, contained in the sintered aid form a compound.
The disclosure of WO 2018/075809 A1 relates to rechargeable batteries and solid electrolytes therefore which include lithium-stuffed garnet oxides, for example, in a thin film, pellet, or monolith format wherein the density of defects at a surface or surfaces of the solid electrolyte is less than the density of defects in the bulk. In certain disclosed embodiments, the solid-state anolyte, electrolyte, and catholyte thin films, separators, and monoliths consist essentially of an oxide that conducts Li+ ions. In some examples, the disclosure of WO 2018/075809 A1 presents new and useful solid electrolytes for solid-state or partially solid-state batteries. In some examples, the disclosure of WO 2018/075809 A1 presents new lithium-stuffed garnet solid electrolytes and rechargeable batteries which include these electrolytes as separators between a cathode and a lithium metal anode.

### SUMMARY OF THE INVENTION

However, in Journal of Power Sources, 363: 145-152, September 2017·with·92 Reads, a higher critical current density is exhibited according to a fine structure of the crystal grain boundary. However, lithium is grown via voids, it is not possible to prevent short circuiting, and further improvement has been desired.

The present disclosure provides a composite structure, a lithium battery, and a method of producing a composite structure through which it is possible to prevent short circuiting in a solid electrolyte separator used in a secondary battery.

The inventors conducted extensive studies and found that, when a precipitation field in which a metal is precipitated is secured in a porous layer and a compact layer for preventing short circuiting is integrally formed, it is possible to achieve both ion conductivity and prevention of short circuiting, and completed the invention disclosed in this specification.

The present invention relates to an all-solid state lithium battery comprising a positive electrode containing a positive electrode active material, a negative electrode containing a negative electrode active material and a composite structure interposed between the positive electrode and the negative electrode. The composite structure comprises a compact layer made of a solid electrolyte and a porous layer which contains the solid electrolyte and is integrally formed with the compact layer without having a bonding interface, wherein at least one of the compact layer and the porous layer contains a sintering aid, and the porous layer has a relative density in a range of 40% or more and 60% or less.

The present invention also relates to a method of producing a composite structure which includes a laminating process in which a first layer in which a hydrogen-containing solid electrolyte powder is filled and a second layer in which a powder obtained by mixing hydrogen-containing solid electrolyte particles and an alkali hydroxide is filled are formed to obtain a laminate, and a firing process in which the laminate is fired at a temperature at which the hydrogen-containing solid electrolyte and the alkali hydroxide are chemically sintered, wherein, in the laminating process, the first layer is formed using the hydrogen-containing solid electrolyte that is a garnet oxide containing at least Li, H, La and Zr, and the second layer is formed using the hydrogen-containing solid electrolyte that is a garnet oxide containing at least Li, H, La and Zr and the alkali hydroxide that is lithium hydroxide, and wherein, in the laminating process, the hydrogen-containing solid electrolyte represented by a basic composition (Li_{7-3x+y-z-a}HₐM_{X})(La_{3-y}A_{y})(Zr_{2-z}T_{z})O₁₂ is used, and M is one or more of Al and Ga, A is one or more of Ca and Sr, T is one or more of Nb and Ta, and 0≤x≤0.2, 0≤y≤0.2, 0≤z≤2, and 0.9≤a≤2.2 are satisfied, and wherein, in the laminating process, in at least one of the first layer and the second layer, 20 volume % or less of lithium borate with respect to a volume of the hydrogen-containing solid electrolyte is used.

The lithium battery and the method of producing a composite structure prevent internal short circuiting of the secondary battery. The reason why such an effect is obtained is speculated as follows. For example, it is speculated that a precipitation field in which a metal precipitates is secured in the porous layer, and a compact layer for preventing short circuiting is integrally formed, and thus both ion conductivity and short circuiting prevention can be achieved.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an explanatory diagram showing an example of a structure of a lithium battery 10;
FIG. 2A is an explanatory diagram of a method of producing a composite structure;
FIG. 2B is an explanatory diagram of a method of producing a composite structure;
FIG. 2C is an explanatory diagram of a method of producing a composite structure;
FIG. 2D is an explanatory diagram of a method of producing a composite structure;
FIG. 3 is an explanatory diagram of a symmetric cell 40 used for a Li dissolution precipitation test;
FIG. 4 shows results of a dissolution precipitation test for a symmetric cell;
FIG. 5A shows a metal precipitation model diagram;
FIG. 5B shows a metal precipitation model diagram;
FIG. 5C shows a metal precipitation model diagram;
FIG. 5D shows a metal precipitation model diagram;
FIG. 5E shows an SEM image of a separator;
FIG. 6 shows diagrams of the relationship between a composition and a porosity of a sintering aid;
FIG. 7A shows a diagram of the relationship between a composition and a porosity of a sintering aid, and electrical conductivity;
FIG. 7B shows a diagram of the relationship between a composition and a porosity of a sintering aid, and electrical conductivity;
FIG. 8 shows a raw material volume fraction and an SEM image of a composite structure of porous layer/compact layer/porous layer;
FIG. 9 shows SEM images of the composite structure of porous layer/compact layer/porous layer;
FIG. 10 shows results of a dissolution precipitation test for the composite structure of porous layer/compact layer/porous layer;
FIG. 11A shows an impedance measurement result of the composite structure subjected to a Li dissolution precipitation test; and
FIG. 11B shows an impedance measurement result of the composite structure subjected to a Li dissolution precipitation test.

### DETAILED DESCRIPTION OF EMBODIMENTS

### (Composite structure)

A composite structure of the present disclosure is a composite structure adapted to a separator of a secondary battery including a compact layer containing a solid electrolyte and a porous layer which contains a solid electrolyte and is integrally formed with the compact layer without having a bonding interface. The composite structure may conduct alkali metal ions. Examples of alkali metals include lithium, sodium, and potassium. Among these, lithium is preferable. Hereinafter, those that conduct lithium ions will be mainly described.

The composite structure contains a solid electrolyte. The solid electrolyte of the compact layer and the solid electrolyte of the porous layer in the composite structure are the same material or materials with partially different compositions, but are more preferably the same material. The solid electrolyte is not particularly limited, and an oxide-based inorganic solid electrolyte is preferable, and examples thereof include a garnet oxide having lithium ion conductivity. The garnet oxide has lithium reduction resistance and a wide potential window. The garnet oxide may contain at least Li, La, and Zr. Alternatively, the garnet oxide may contain at least Li, La, and Y. In addition, the garnet oxide may additionally contain at least one element A of an alkaline earth metal and a lanthanoid element which are elements different from La and at least one element T which is an element different from Zr and Y and selected from among transition elements that can 6-coordinate with oxygen and typical elements belonging to Group 12 to Group 15. In addition, a Li site of the garnet oxide may be replaced with a 3-valent element such as Al or Ga. More specifically, the solid electrolyte may have a garnet oxide represented by a basic composition (Li_{7-3x+y-z}Mₓ)(La_{3-y}A_{y})(Zr_{2-z}T_{z})O1₂ or, (Li_{7-3x+y-z}Mₓ)(La_{3-y}A_{y})(Y_{2-z}T_{z})O_{12.} Here, in the formula, M is one or more of Al and Ga, A is one or more of Ca and Sr, T is one or more of Nb and Ta, and 0≤x≤0.2, 0≤y≤0.2, and 0≤z≤2 are satisfied. If a garnet oxide contains Sr, the melting point can be lowered, the firing temperature can be lowered, and the firing energy can be further reduced. In addition, if Ca is contained, lithium ion conductivity can be further improved. T is preferably Nb. When Nb is contained in a garnet oxide, lithium ion conductivity can be further increased. In the basic composition formula, it is more preferable to satisfy 0.05≤x≤0.1. In the basic composition formula, it is more preferable to satisfy 0.05≤y≤0.1. In addition, in the basic composition formula, it is more preferable to satisfy 0.1≤z≤0.8.

Here, the garnet oxide need only mainly have a garnet structure, may include, for example, a part of a structure other than the garnet type, and may include a distorted structure as viewed from the garnet structure such as a shifted X-ray diffraction peak position. In addition, as shown in the composition formula, in the composite structure, other elements and structures may be partially contained. In addition, "basic composition" indicates that elements M, A, and T may include a main component element and one or more sub-component elements. Here, details of a garnet lithium ion conductive oxide are described in, for example, Japanese Patent Application Publication No. 2010-202499.

In addition, examples of inorganic solid electrolytes include Li₃N, and Li₁₄Zn(GeO₄)₄ called LISICON, sulfide Li_{3.25}Ge_{0.25}P_{0.75}S₄, perovskite type La_{0.5}Li_{0.5}TiO₃, (La_{2/3}Li₃ₓ□_{1/3-2x})TiO₃ (□: atomic vacancy), garnet type Li₇La₃Zr₂O₁₂, and LiTi₂(PO₄)₃ and Li_{1.3}M_{0.3}Ti_{1.7}(PO₃)₄ (M = Sc, Al) called a NASICON type. In addition, examples thereof include Li₇P₃S₁₁ obtained from a glass having a composition of 80Li₂S·20P₂S₅ (mol%) which is a glass ceramic, and Li₁₀Ge₂PS₂ which is a sulfide material having high conductivity. Examples of glass inorganic solid electrolytes include Li₂S-SiS₂, Li₂S-SiS₂-LiI, Li₂S-SiS₂-Li₃PO₄, Li₂S-SiS₂-Li₄SiO₄, Li₂S-P₂S₅, Li₃PO₄-Li₄SiO₄, Li₃BO₄-Li₄SiO₄, and those in which SiO₂, GeO₂, B₂O₃, or P₂O₅ is used as a glass material, and Li₂O is used as a network modifying material. In addition, examples of thio-LISICON solid electrolytes include Li₂S-GeS₂, Li₂S-GeS₂-ZnS, Li₂S-Ga₂S₂, Li₂S-GeS₂-Ga₂S₃, Li₂S-GeS₂-P₂S₅, Li₂S-GeS₂-SbS₅, Li₂S-GeS₂-Al₂S₃, Li₂S-SiS₂, Li₂S-P₂S₅, Li₂S-Al₂S₃, LiS-SiS₂-Al₂S₃, and Li₂S-SiS₂-P₂S₅ solid electrolytes.

The compact layer is a part in which a solid electrolyte is dense, and for example, a layer having a relative density of 90% or more may be used. The relative density of the compact layer is preferably higher, and is preferably 92% or more, more preferably 95% or more, and most preferably 98% or more. The relative density is calculated as a relative density if the density when the solid electrolyte has no voids is set as 100%. The relative density is calculated without considering a sintering aid. The relative density calculated without considering a sintering aid is lower than the relative density calculated while considering a sintering aid, and thus overestimation can be prevented. The thickness of the compact layer may be in a range of 2 µm or more and 300 µm or less. When the thickness is 2 µm or more, short circuiting of the electrode is more easily prevented, and when the thickness is 300 µm or less, ion conductivity is more easily secured. For example, the thickness of the compact layer is preferably 5 µm or more and more preferably 10 µm or more, and may be 20 µm or more. In addition, for example, the thickness of the compact layer is preferably 200 µm or less and more preferably 150 µm or less, and may be 100 µm or less. In order to produce the compact layer, since about 10 solid electrolyte particles are necessary, when the particle size of the solid electrolyte is 0.5 µm, the compact layer with a thickness of 5 µm can be produced, and a range of 15 µm or more and 100 µm or less is preferable.

The porous layer is a part having more voids in the solid electrolyte integrally formed with the compact layer. The porous layer does not have a bonding interface between it and the compact layer. The porous layer is a layer bonded to an electrode of a secondary battery. The porous layer may be formed on a first surface of the compact layer or may be formed on a first surface and a second surface behind the first surface, and more preferably, may be formed on a first surface and a second surface. The composite structure having a structure of porous layer/compact layer/porous layer is preferable in consideration of ease of production. In addition, in the composite structure including a 3-layer structure of porous layer/compact layer/porous layer, when the center of the compact layer is cut, a 2-layer structure of porous layer/compact layer can also be obtained. Alternatively, within the 3-layer structure, one porous layer can be cut to obtain a 2-layer structure of porous layer/compact layer. The porous layer has have a relative density in the range of 40% or more and 60% or less. When the relative density is 40% or more, metal carriers precipitated from the electrode due to charging and discharging can be sufficiently received in the voids. In addition, when the relative density is 60% or less, the presence of the solid electrolyte can be secured and decrease in the ion conductivity can be further reduced. This relative density is calculated in the same manner as in the compact layer. In addition, the porous layer may have a thickness in the range of 2 µm or more and 100 µm or less. When the thickness is 2 µm or more, metal carriers precipitated from the electrode due to charging and discharging can be sufficiently received in the voids. In addition, when the thickness is 100 µm or less, ion conduction resistance can be further reduced. For example, the thickness of the porous layer is preferably 5 µm or more and more preferably 10 µm or more, and may be 15 µm or more. In addition, for example, the thickness of the porous layer is preferably 80 µm or less, more preferably 60 µm or less, and may be 50 µm or less.

The porous layer may have voids formed by evaporation of a sintering aid according to a chemical reaction with a component contained in the solid electrolyte. Specifically, the porous layer may have voids formed when a hydrogen-containing solid electrolyte reacts with an alkali hydroxide sintering aid and water is evaporated. In the composite structure, pores can be formed while improving ion conductivity.

At least one of the compact layer and the porous layer contains a sintering aid. The sintering aid may be present at the grain boundary part of solid electrolyte particles. The compact layer and/or the porous layer may contain 20 volume% or less of a sintering aid with respect to the volume of the solid electrolyte. For example, the sintering aid more preferably has lithium ion conductivity and may contain at least Li and B. The sintering aid is preferably lithium borate. Examples of lithium borate include Li₃BO₃, Li₂B₄O₇, and LiBO₂. Among these, Li₃BO₃ (hereinafter referred to as LBO) is more preferable. LBO is preferable because it is less reactive with the solid electrolyte. In addition, regarding the sintering aid, aluminum oxide, gallium oxide, or the like may be used. An Al or Ga sintering aid may be contained in the Li site of a garnet oxide containing Li. In addition, 5 volume% or less of an Al or Ga sintering aid may be contained with respect to the volume of the solid electrolyte. Alternatively, examples of sintering aids include those that chemically react with a component contained in the solid electrolyte due to firing and evaporate. Examples of such sintering aids include an alkali hydroxide. Examples of alkali hydroxides include Li, Na, and K hydroxides and the like. Among these, lithium hydroxide is more preferable. Since an alkali hydroxide has low ion conductivity, the content in the compact layer and the porous layer is preferably smaller. The content of the alkali hydroxide is preferably in a range of 36 volume% or less with respect to the solid electrolyte. In this range, decrease in the contact ability between solid electrolyte particles can be further reduced and decrease in the ion conductivity can be further reduced.

In the composite structure, for example, the solid electrolyte is chemically sintered to form a compact layer and a porous layer. Examples of chemical sintering include a dehydration reaction between a hydrogen-containing solid electrolyte and an alkali hydroxide. In the composite structure, the electrical conductivity (lithium ion conductivity, 25°C) is preferably 0.4×10⁻⁴ (S/cm) or more, more preferably 1.0×10⁻⁴ (S/cm) or more, and most preferably 1.5×10⁻⁴ (S/cm) or more. The electrical conductivity can be appropriately changed by adjusting the sintering aid, the addition ratio (x, y, z) of elements M, A, and T of the basic composition formula, and the firing temperature.

The composite structure is fired in a temperature range in which the solid electrolyte is chemically sintered. Regarding the firing temperature, for example, firing is preferably performed at 1,100°C or lower, firing is more preferably performed at 1,050°C or lower, and firing is most preferably performed at 1,000°C or lower. In firing at 1,100°C or lower, firing energy can be further reduced. In order to sinter the solid electrolyte, the composite structure is preferably fired at 700°C or higher, more preferably at 750°C or higher, and most preferably at 800°C or higher.

The composite structure can be used for a lithium battery because it has higher lithium ion conductivity. In this case, for example, the composite structure may be used as a solid electrolyte of a lithium battery or may be used as a separator of a lithium battery.

### (Lithium battery)

A lithium battery of the present disclosure has the above composite structure. The lithium battery may be a secondary battery. The lithium battery is an all-solid state lithium battery The lithium battery includes a positive electrode containing a positive electrode active material, a negative electrode containing a negative electrode active material, and the above composite structure interposed between the positive electrode and the negative electrode. In addition, in the lithium battery, in the composite structure, preferably, the compact layer is arranged on the side of the positive electrode, and the porous layer is arranged on the side of the negative electrode. The composite structure may have a 2-layer structure of a compact layer and a porous layer. In such a battery structure, the porous layer which is a lithium metal precipitation field is on the side of the negative electrode in which a lithium metal is likely to precipitate, and the compact layer in which short circuiting can be reduced is arranged on the side of the positive electrode and thus a stronger short circuiting prevention effect can be obtained. In addition, in consideration of an energy density, the composite structure having a 2-layer structure is more preferable than that having a 3-layer structure of porous layer/compact layer/porous layer.

The positive electrode may be formed, for example, by applying a paste-like positive electrode material obtained by mixing a positive electrode active material, a conductive material, and a binder, adding a suitable solvent to a surface of a current collector, and performing drying and compressing as necessary to increase an electrode density. Regarding the positive electrode active material, a sulfide containing a transition metal element, an oxide containing lithium and a transition metal element, or the like can be used. Specifically, a transition metal sulfide such as TiS₂, TiS₃, MoSs, or FeS₂, a lithium manganese composite oxide having a basic composition formula of Li(1-x)MnO₂ (for example, 0<x<1, the same applies hereinafter), Li₍₁₋ₓ₎Mn₂O₄ or the like, a lithium cobalt composite oxide having a basic composition formula of Li₍₁₋ₓ₎CoO₂ or the like, a lithium nickel composite oxide having a basic composition formula of Li₍₁₋ₓ₎NiO₂ or the like, a lithium nickel cobalt manganese composite oxide having a basic composition formula of Li₍₁₋ₓ₎NiₐCo_{b}Mn_{c}O₂ (a + b + c = 1) or the like, a lithium vanadium composite oxide having a basic composition formula of LiV₂O₃ or the like, a transition metal oxide having a basic composition formula of V₂O₅ or the like, and the like can be used. Among these, a lithium transition metal composite oxide, for example, LiCoO₂, LiNiO₂, LiMnO₂, or LiV₂O₃, is preferable. Here, the "basic composition formula" is intended to include other elements. The conductive material is not particularly limited as long as it is an electron conductive material that does not negatively influence battery performance of the positive electrode. For example, graphite such as natural graphite (scaly graphite, flaky graphite) and artificial graphite, acetylene black, carbon black, Ketjen black, carbon whisker, needle coke, carbon fibers, and a metal (copper, nickel, aluminum, silver, gold, etc.) may be used alone or two or more thereof may be used in combination. Among these, regarding the conductive material, in consideration of electron conductivity and coating properties, carbon black and acetylene black are preferable. The binder has a function of binding active material particles and conductive material particles, and for example, a fluorine-containing resin such as polytetrafluoroethylene (PTFE), polyvinylidene fluoride (PVDF), and a fluoro rubber, a thermoplastic resin such as a polypropylene and a polyethylene, an ethylene propylene diene monomer (EPDM) rubber, a sulfonated EPDM rubber, and a natural butyl rubber (NBR) may be used alone or two or more thereof may be used in combination. In addition, a water dispersion of cellulose and styrene butadiene rubber (SBR) which is an aqueous binder or the like can be used. Regarding a solvent in which a positive electrode active material, a conductive material, and a binder are dispersed, for example, an organic solvent such as N-methylpyrrolidone, dimethylformamide, dimethylacetamide, methyl ethyl ketone, cyclohexanone, methyl acetate, methyl acrylate, diethylenetriamine, N,N-dimethylaminopropylamine, ethylene oxide, and tetrahydrofuran can be used. In addition, a dispersant, a thickener, and the like are added to water, and an active material may be slurried in latex such as SBR. Regarding the thickener, for example, polysaccharides such as carboxymethylcellulose and methylcellulose may be used alone or two or more thereof may be used in combination. Examples of an application method include roller coating using, for example, an applicator roller, screen coating, a doctor blade method, spin coating, and a bar coater method, and any of these can be used to form an arbitrary thickness and shape. Regarding the current collector, those of which a surface of aluminum, copper or the like is treated with carbon, nickel, titanium, or silver in order to improve adhesiveness, conductivity, and oxidation resistance can be used in addition to aluminum, titanium, stainless steel, nickel, iron, fired carbon, a conductive polymer, and conductive glass. The surface of the current collector can be oxidized. Examples of the shape of the current collector include a foil form, a film form, a sheet form, a net form, a punched or expanded form, a lath form, a porous form, a foam, and a fiber group form. The current collector having a thickness of, for example, 1 µm to 500 µm, is used.

The negative electrode may be formed by adhering a negative electrode active material and a current collector. For example, a paste-like negative electrode material obtained by mixing a negative electrode active material, a conductive material, and a binder and adding a suitable solvent is applied to a surface of a current collector and then is dried, and compressing are performed as necessary to increase an electrode density for formation. Examples of negative electrode active materials include lithium, a lithium alloy, an inorganic compound such as a tin compound, a carbonaceous material that can occlude and release lithium ions, a composite oxide containing a plurality of elements, and a conductive polymer. Examples of carbonaceous materials include cokes, glassy carbons, graphites, non-graphitizable carbons, pyrolytic carbons, and carbon fibers. Among these, graphites such as artificial graphite and natural graphite are preferable because they have an operation potential close to that of the metal lithium, and enable charging and discharging at a high operation voltage, can reduce self-discharging when a lithium salt is used as a support salt, and can reduce an irreversible capacity during charging. Examples of a composite oxide include a lithium titanium composite oxide and a lithium vanadium composite oxide. A carbonaceous material is preferable as the negative electrode active material in consideration of safety. In addition, as a conductive material, a binder, a solvent and the like used in the negative electrode, those exemplified in the positive electrode can be used. Regarding the current collector of the negative electrode, in addition to copper, nickel, stainless steel, titanium, aluminum, fired carbon, a conductive polymer, conductive glass, an Al-Cd alloy, and the like, in order to improve adhesiveness, conductivity, and reduction resistance, those of which a surface of copper or the like is treated with, for example, carbon, nickel, titanium or silver can be used. The surface of the current collector can be oxidized. The shape of the current collector can be the same as that of the positive electrode.

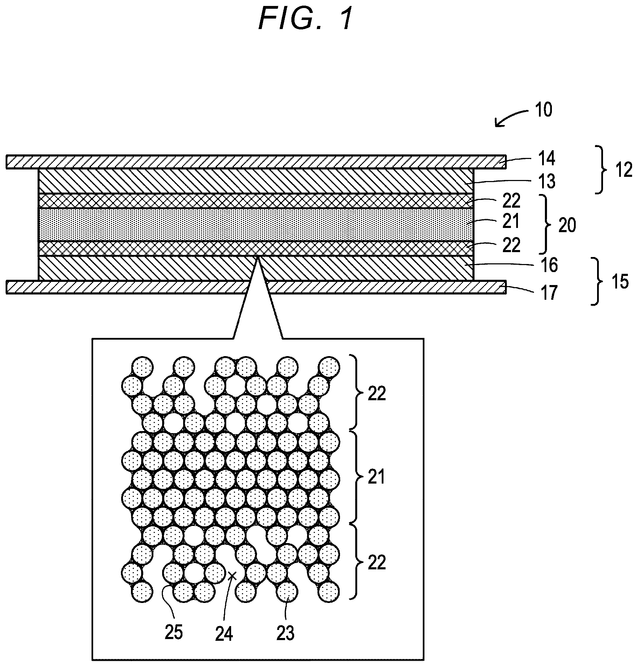

The structure of the lithium battery is not particularly limited, and for example, a structure shown in FIG. 1 may be used. FIG. 1 is explanatory diagram showing an example of a structure of a lithium battery 10. The lithium battery 10 includes a positive electrode 12, a negative electrode 15, and a separator 20. The positive electrode 12 includes a positive electrode active material layer 13 and a current collector 14. The negative electrode 15 includes a negative electrode active material layer 16 and a current collector 17. The separator 20 has the above composite structure, which is a multi-layer structure of porous layer 22/compact layer 21/porous layer 22. The positive electrode active material layer 13 is formed on the surface of one porous layer 22, and the negative electrode active material layer 16 is formed on the surface of the other porous layer 22. This separator contains solid electrolyte particles 23, and grain boundary parts 25 are formed at the grain boundaries. The grain boundary parts 25 may include, for example, a sintering aid. In the porous layer 22, voids 24 are formed. The voids 24 may be formed by evaporation of a sintering aid according to a chemical reaction with a component contained in the solid electrolyte. Specifically, the voids 24 may be formed when a hydrogen-containing solid electrolyte reacts with an alkali hydroxide sintering aid and water is evaporated.

### (Method of producing a composite structure)

Next, a method of producing a composite structure of the present disclosure will be described. This production method is a method of producing a composite structure used for a separator of a secondary battery. The production method includes a laminating process of forming a laminate and a firing process of firing the laminate. In the production method, a composite structure used as a separator is produced by chemical sintering with a chemical reaction between hydrogen and hydroxide without melting and sintering which have a limit for forming pores. In particular, a compact layer can be formed by chemical sintering and a porous layer can be formed in the same process by evaporation of water.

In the laminating process, a first layer in which a hydrogen-containing solid electrolyte powder is filled and a second layer in which a powder obtained by mixing hydrogen-containing solid electrolyte particles and an alkali hydroxide is filled are formed to obtain a laminate. The first layer serves as a compact layer, and the second layer serves as a porous layer. The second layer may be formed on at least one of a first surface and a second surface of the first layer, and is preferably formed on the first surface and the second surface. That is, in the process, a laminate of second layer/first layer/second layer is preferably produced. When the same layer is provided on both sides, this is preferable because warpage during firing can be further reduced. Here, after the laminating process, a process of performing division at the center of the first layer in the 3-layer structure may be performed, and after the firing process, a process of performing division at the center of the compact layer in the 3-layer structure may be performed. Alternatively, after the firing process, a process of cutting one porous layer in the 3-layer structure may be performed. When this division process or cutting process is performed, a 2-layer structure of porous layer/compact layer can be obtained. In the laminating process, the first layer is formed using a hydrogen-containing solid electrolyte which is a garnet oxide containing at least Li, H, La and Zr, and the second layer is formed using a hydrogen-containing solid electrolyte which is a garnet oxide containing at least Li, H, La and Zr and an alkali hydroxide which is a lithium hydroxide. Regarding the hydrogen-containing solid electrolyte, those represented by a basic composition (Li_{7-3x+y-z-a}HₐM_{X})(La_{3-y}A_{y})(Zr_{2-z}T_{z})O₁₂ are used. However, in the formula, M is one or more of Al and Ga, A is one or more of Ca and Sr, T is one or more of Nb and Ta, and 0≤x≤0.2, 0≤y≤0.2, 0≤z≤2, and 0.9≤a≤2.2 are satisfied. In the basic composition formula, when the hydrogen content a is 0.9 or more, sintering can be further promoted and decrease in the electrical conductivity (ion conductivity) can be further reduced. In addition, when the hydrogen content a is 2.2 or less, decrease in the crystallinity of the solid electrolyte is further reduced, and thus decrease in the electrical conductivity can be further reduced. In addition, the hydrogen-containing solid electrolyte can be produced as follows. For example, a garnet oxide containing no hydrogen is produced, and an excess amount of an alkali hydroxide (for example, lithium hydroxide) is then added thereto, mixed, and pulverized. This mixed and pulverized product is preliminarily fired in a temperature range of 700°C to 900°C, and immersed in water when there are no remaining unreacted raw material components, and thus exchange between an alkali metal and hydrogen is performed. The exchange between the alkali and hydrogen is not limited to being left but it may be performed, for example, by applying an ultrasound with an ultrasonic cleaning machine. In addition, an amount of water with respect to the garnet oxide may be increased. An immersion time may be 30 minutes or longer, and may be shortened or lengthened. In addition, an exchange operation between the alkali metal and hydrogen may be repeated a plurality of times. An amount of H exchanged can be controlled by changing conditions, and an amount of H can be controlled in a range of 0≤a≤2.8. A method of forming a first layer and a second layer is not particularly limited, and for example, raw material particles may be filled into a mold and pressed and molded. Alternatively, raw material particles may be formed into a paste form and subjected to screen printing, or a doctor blade method may be used.

In the laminating process, it is preferable to add an alkali hydroxide in an equimolecular amount or larger with respect to hydrogen contained in the entire laminate to the second layer. The alkali hydroxide is thought to diffuse also in the first layer in the firing process. In the laminating process, preferably, raw materials having a molar ratio Ma/Mh (which is a ratio of the number of moles Ma of the alkali hydroxide to the number of moles Mh of H of the hydrogen-containing solid electrolyte) of 1 or more are mixed to form a second layer. When the molar ratio Ma/Mh is 1 or more, this is preferable because decomposition of the solid electrolyte in the firing process and the like can be further reduced. In addition, in consideration of the remaining alkali hydroxide, the molar ratio Ma/Mh is preferably larger than 1. In consideration of the remaining alkali hydroxide, the molar ratio Ma/Mh is preferably 2.5 or less. In addition, in this process, regarding the second layer, it is preferable to form a second layer in which the alkali hydroxide remaining after firing is in a range of 36 volume% or less with respect to a solid electrolyte dehydrated from the hydrogen-containing solid electrolyte. In this range, since contact between solid electrolyte particles can be secured, decrease in the ion conductivity can be further reduced. The amount of the remaining alkali hydroxide is preferably in a range in which it remains at the grain boundary triple point.

In the laminating process, a first layer having a thickness in a range of 2 µm or more and 300 µm or less may be formed and a second layer having a thickness in a range of 2 µm or more and 100 µm or less may be formed. The thicknesses of the compact layer and the porous layer can be appropriately set within the range described in the composite structure.

In the laminating process, in the first layer and/or the second layer, a sintering aid other than the alkali hydroxide is added. The sintering aid is lithium borate. In this case, in particular, preferably, the second layer that forms a porous layer contains an alkali hydroxide and a sintering aid other than the alkali hydroxide, and the first layer that forms a compact layer does not contain a sintering aid (such as an alkali hydroxide and lithium borate). In the first layer with less sintering aid, the generation of voids formed when a sintering aid melts and moves to the grain boundary can be reduced, and the second layer can be made a more compact layer. The sintering aid required for the first layer may be added to the second layer. It is thought that components of the sintering aid diffuse from the second layer to the first layer due to heating in the firing process. In addition, since there is a large amount of a sintering aid that generates voids in the second layer, it is possible to obtain a porous layer with more pores. The sintering aid other than the alkali hydroxide is added in a range of 20 volume% or less (the content of the solid electrolyte is 80 volume% or more) with respect to the volume of the hydrogen-containing solid electrolyte. When the content of the sintering aid is 20 volume% or less, this is preferable because contact between solid electrolyte particles can be secured, and decrease in the ion conductivity can be further reduced. An amount of the sintering aid added is preferably 1 volume% or more, more preferably 2 volume% or more, and most preferably 5 volume% or more. In addition, the amount of the sintering aid added is preferably 15 volume% or less, more preferably 10 volume% or less, and most preferably 8 volume% or less.

In the firing process, the laminate is fired at a temperature at which a hydrogen-containing solid electrolyte and an alkali hydroxide are chemically sintered. In this process, hydrogen and hydroxide contained in the solid electrolyte chemically react to form water, water evaporates, and thus voids are generated, and formation of the porous layer is promoted. When no alkali hydroxide is added to the first layer, the alkali hydroxide present in the second layer diffuses during firing, and thus sintering occurs in the first layer without generation of voids, and the compact layer is formed. For example, the firing temperature is preferably 1,100°C or lower, more preferably 1,050°C or lower, and most preferably 1,000°C or lower. In firing at 1,100°C or lower, firing energy can be further reduced. In order to secure sinterability, the laminate is fired preferably at 700°C or higher, more preferably 750°C or higher, and most preferably 800°C or higher. The firing treatment can be performed in the air, and may be performed, for example, in an inert atmosphere such as nitrogen or an inert gas. The firing time may be appropriately set depending on the size and composition of the laminate, and may be, for example, 2 hours or longer, 5 hours or longer, or 8 hours or longer. In addition, in consideration of energy consumption, the firing time is preferably as short as possible, and may be 24 hours or shorter, 12 hours or shorter, or 10 hours or shorter.

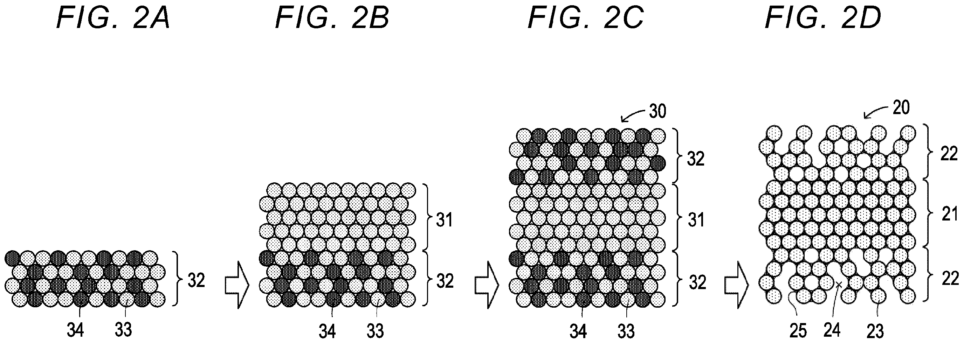

FIGS. 2A to 2D are explanatory diagrams of a method of producing a composite structure, FIG. 2A shows a second layer forming process, FIG. 2B shows a first layer forming process, FIG. 2C shows an additional second layer forming process, and FIG. 2D shows the composite structure after firing. First, initially, a second layer 32 serving as the porous layer 22 is formed using a mixed powder in which hydrogen-containing solid electrolyte particles 33 and sintering aid particles 34 are mixed at a predetermined mixing ratio (FIG. 2A). An alkali hydroxide is contained in the sintering aid particles 34. In addition, lithium borate may be contained in the sintering aid particles 34. Next, using the hydrogen-containing solid electrolyte particles 33 containing no sintering aid particles 34, a first layer 31 serving as a compact layer is formed on the second layer 32 (FIG. 2B). Then, the second layer 32 serving as the porous layer 22 is formed on the first layer 31 using the mixed powder to obtain a laminate 30 (FIG. 2C). Then, the hydrogen-containing solid electrolyte particles 33 and the sintering aid particles 34 (alkali hydroxide) chemically react and the composite structure in which the solid electrolyte particles 23 are sintered at the grain boundary part 25 containing a sintering aid can be obtained. The composite structure has a structure in which the porous layer 22 in which voids 24 are formed by evaporating the component of the sintering aid and the compact layer 21 in which no voids 24 are formed are integrally formed. The above composite structure can be produced through such a process.

In the composite structure, the lithium battery, and the method of producing a composite structure described above in detail, it is possible to prevent internal short circuiting of the secondary battery. The reason why such an effect is obtained is speculated as follows. For example, in this composite, it is speculated that a precipitation field in which a metal precipitates is secured in the porous layer, and a compact layer for preventing short circuiting is integrally formed, and thus both ion conductivity and short circuiting prevention can be achieved.

Here, it should be noted that the present disclosure is not limited to the above embodiment, and can be implemented in various forms within the technical scope of the present disclosure.

Hereinafter, examples in which the composite structure of the present disclosure is specifically produced will be described as experimental examples.

### [Production of garnet oxide]

First, Li_{6.8}(La_{2.95}Ca_{0.05})(Zr_{1.75}Nb_{0.25})O₁₂(LLZ-CN) containing no hydrogen was synthesized as solid electrolyte particles. LiOH(H₂O), La(OH)₃, Ca(OH)₂, ZrO₂, and NbaOs were used as starting raw materials. The starting raw materials were weighed out so that a stoichiometric ratio was obtained, and mixed and pulverized. Mixing and pulverization were performed in a planetary ball mill (300 rpm) in ethanol using zirconia balls for 1 hour. Then, preliminary firing (700°C, 48 h) was performed. After preliminary firing was performed, in order to compensate for Li deficiency during sintering, an excess amount of LiOH(H₂O) was added to the powder so that there was 10at% with respect to Li in the composition. Then, mixing and pulverization were performed again under the same conditions. Then, preliminary firing (700°C, 10 h) was performed again. In the powder that had undergone the above preliminary firing twice, a crystal phase was identified by XRD, and it was confirmed that there were no remaining unreacted raw materials. Then, the LLZ-CN powder was immersed in water and thus Li and H were exchanged. Regarding immersion conditions, water and LLZ-CN were left at a ratio of 50 mg of water to 4 g of LLZ-CN, at room temperature (about 25°C) for 30 minutes, and thus Li and H were exchanged. When the composition after exchange between Li and H in the condition was analyzed, it was (Li_{5.6}, H_{1.2})(La_{2.95}, Ca_{0.05})(Zr_{1.75}, Nb_{0.25})O₁₂ (LLZ-HCN). Here, an amount of H was identified as follows. First, the powder after H substitution was subjected to TG·DTA-MASS measurement, a temperature range in which H₂O (molecular weight of 18) evaporated from a sample was determined in the MASS measurement, and a weight reduction amount in the temperature range was quantified as Tg. The atomic weight of H contained in LLZ-HCN was calculated from the mass and molecular weight of LLZ-CN, and the mass and molecular weight of evaporated water.

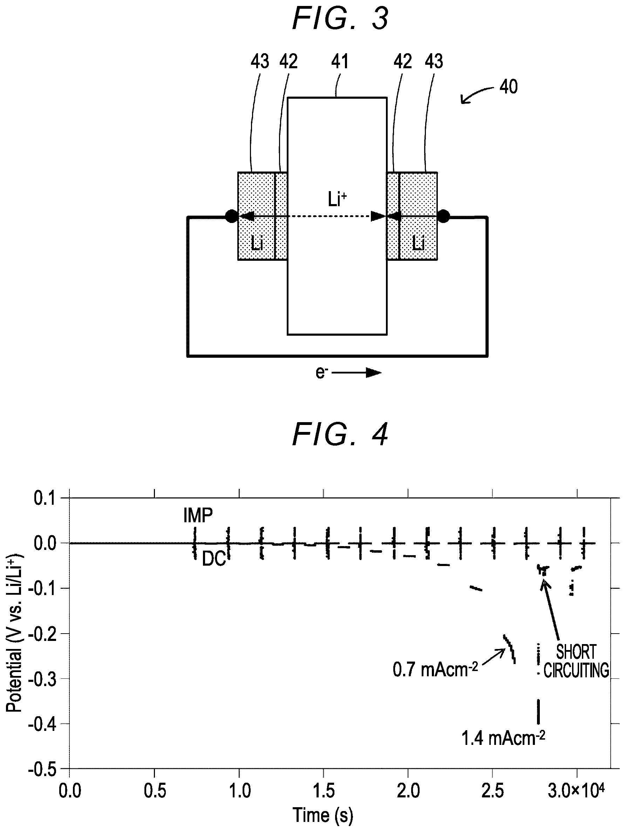

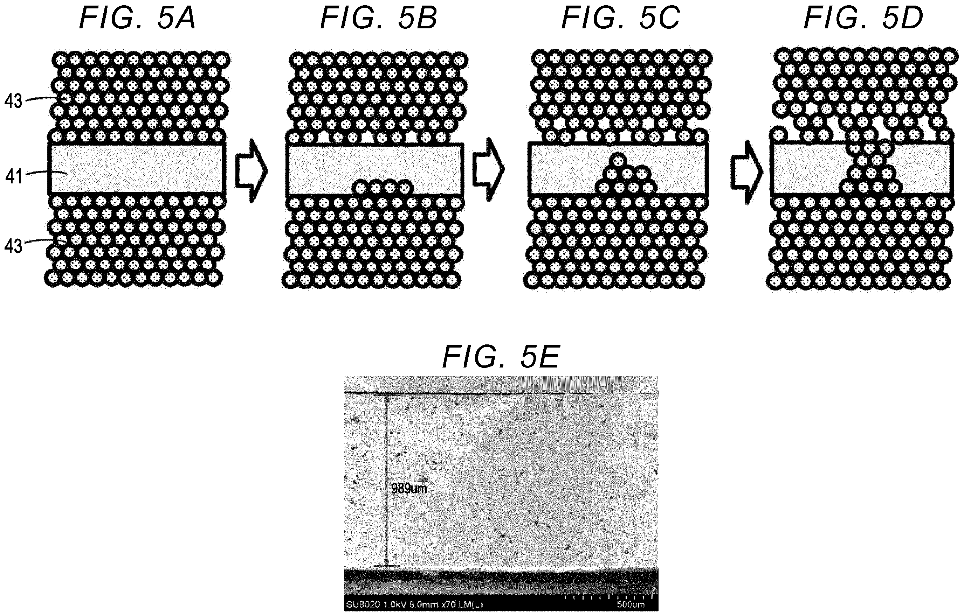

First, the solid electrolyte particles (LLZ-CN) were sintered to produce a separator, a symmetric cell having the same electrodes was produced, and short circuiting thereof was examined. FIG. 3 is an explanatory diagram of a symmetric cell 40 used for a Li dissolution precipitation test. The symmetric cell 40 included a separator 41, deposition layers 42 formed on a first surface and a second surface of the separator 41, and Li electrodes 43 pressed on the deposition layer 42. The separator 41 was a sintered product obtained by melting and sintering LLZ-CN with LBO. The symmetric cell 40 was produced by forming the deposition layer 42 in which the metal Li was vapor-deposited on a first surface and a second surface of the separator 41, and compressing a Li metal foil as a Li electrode thereon. The separator was produced by weighing out 89 volume% of LLZ-CN, 10 volume% of LBO as a sintering aid, and 1 volume% of Al₂O₃, performing press molding to a diameter of 11.28 mm, and a thickness of about 1.2 mm, and then performing sintering at 800°C in the air. A dissolution precipitation test was performed using the symmetric cell 40. FIG. 4 is a diagram showing results of a dissolution precipitation test in which a current per unit area continuously increased with respect to a symmetric cell. In the dissolution precipitation test, a VMP3 galvanostat (commercially available from Biologic) was connected to Li electrodes, and a change in the potential when a current per unit area continuously increased was measured. As shown in FIG. 4, the potential increased to the negative side as the current increased. However, when it exceeded a certain current density, the Li-based potential was 0 V, and short circuiting of the electrode was confirmed. FIGS. 5A to 5D show metal precipitation model diagrams, and FIG. 5E shows a scanning electron microscope (SEM) image of a separator made of a solid electrolyte. SEM observation was performed using S-3600N (commercially available from Hitachi High-Technologies Corporation) under conditions of a magnification of 2,000 to 5,000. As shown in FIGS. 5A to 5D, when a current was applied to the symmetric cell, the metal Li was precipitated in voids inside the separator. It was speculated that the precipitated metal Li grew through voids and Li electrodes were short-circuited. That is, in the melting and sintering in which particles were fixed by melting the sintering aid, as shown in FIG. 5D, it was speculated that, since there were voids in the entire interior of the separator, the metal Li grew and short circuiting occurred.

Here, a method of preventing this short circuiting was examined. Inside the separator produced by mixing solid electrolyte particles and a sintering aid with a uniform composition, the sintering aid dispersed at the grain boundaries and thus voids were generated. It was difficult to eliminate the voids. On the other hand, in order to prevent internal short circuiting of the electrode, the presence of a compact layer having no voids was necessary. Therefore, it was assumed that generation of voids in the separator made of an inorganic solid electrolyte was allowed, the voids were segregated on the side of the first surface and on the side of the second surface opposite to the first surface, and a compact layer was formed at the central part. In addition, it was assumed that, in consideration of voids that function as a buffer in which the precipitated metal Li was stored, more voids were generated on the side of the first surface and the second surface. In addition, for example, according to the sintering aid that evaporated, it was expected that a porous layer having more voids was able to be formed on the side of the first surface and the second surface.

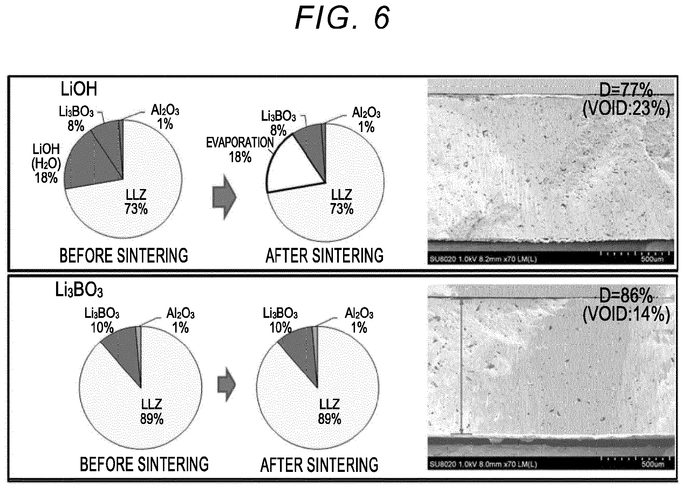

Next, the porosity of the separator was examined. In addition to using LBO and Al₂O₃ as a sintering aid, a sintering aid for obtaining pores was examined. Here, lithium hydroxide was examined as a sintering aid. FIG. 6 shows diagrams of the relationship between the composition and the porosity of the sintering aid. The relative density was calculated as a relative density when the density when the solid electrolyte had no voids was set as 100%. This relative density was calculated without considering a sintering aid. A sample obtained by adding 10 volume% of LBO and 1 volume% of Al₂O₃ to LLZ-CN was sintered at 800°C for 24 h, and the obtained sintered product was used as Experimental Example 1. In addition, a sample obtained by adding 8 volume% of LBO and 18 volume% of LiOH to LLZ-HCN was sintered at 800°C for 24 h, and the obtained sintered product was used as Experimental Example 2. Here, raw materials were selected assuming that the reaction of the following Formula (1) occurred. As shown in the lower part in FIG. 6, it was confirmed that the sintered product of Experimental Example 1 had 14 volume% of voids (relative density of 86%). This was speculated that, when the contained LBO particles moved to the grain boundary, voids were generated at positions at which there were LBO particles. In addition, as shown in the upper part in FIG. 6, it was confirmed that the sintered product of Experimental Example 2 had 23 volume% of voids (relative density of 77%). In this manner, it was found that, when LiOH and LLZ-HCN were used, H₂O produced by the reaction of LiOH and hydrogen evaporated, and it was possible to increase voids.

(Li_{5.4}H_{1.5})(La_{2.95}Ca_{0.05})(Zr_{1.4}Nb_{0.6})O₁₂ + LiOH → (Li_{6.8})(La_{2.95}Ca_{0.05})(Zr_{1.4}Nb_{0.6})O₁₂ + H₂O↑ ... Formula (1)

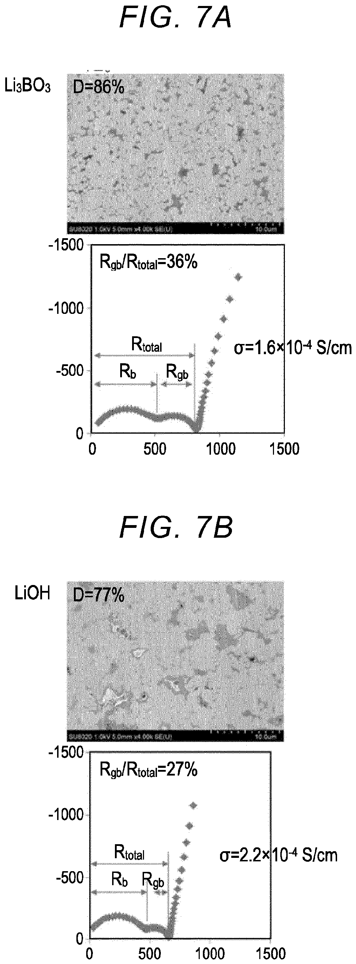

In addition, the electrical conductivity (ion conductivity) of Experimental Examples 1 and 2 was measured. The electrical conductivity was measured under the following conditions. In a thermostatic chamber, a resistance value was determined from the arc of the Nyquist plot using an AC impedance analyzer (Agilent 4294A) under conditions of a frequency of 40 Hz to 110 MHz and an amplitude voltage of 100 mV, and an electrical conductivity was calculated from the resistance value. An Au electrode was used as a blocking electrode during measurement using an AC impedance analyzer. The Au electrode was formed by baking a commercially available Au paste on the surface of the sintered product under conditions of 800°C and 30 minutes. FIGS. 7A and 7B are diagrams of the relationship between the composition and the porosity of the sintering aid, and the electrical conductivity. FIG. 7A shows Experimental Example 1, and FIG. 7B shows Experimental Example 2. As shown in FIG. 7B, it was found that, in Experimental Example 2 in which LiOH was used as a sintering aid, the electrical conductivity at 25°C was 2.2×10⁻⁴ S/cm, which was a value of 1.4 times 1.6×10⁻⁴ S/cm in Experimental Example 1, and the electrical conductivity was improved. Particularly, in Experimental Example 2, the grain-boundary resistivity Rgb was 27%, which was significantly reduced compared with 36% in Experimental Example 1, which suggested that binding between solid electrolyte particles was promoted.

Here, a hydrogen content of LLZ-HCN was examined. In a garnet oxide represented by a basic composition (Li_{7-3x+y-z-a}HₐMₓ)(La_{3-y}A_{y})(Zr_{2-z}T_{z})O₁₂, x = 0, A = Ca, T = Nb, y = 0.05, and z = 0.6 were set, the hydrogen content a was changed in a range of 0.5≤a≤2.5, and a garnet oxide (solid electrolyte) sintered product was produced. Regarding sintered product production conditions, using raw materials to which the equimolal amount of LiOH as the amount of H was added as a sintering aid, a firing treatment was performed in the air at 800°C for 24 hours. The electrical conductivity (ion conductivity) of the produced sintered product was measured under the same conditions as above. In the measurement results, when the hydrogen content a was in a range of 0.9≤a≤2.2, this was preferable because the electrical conductivity at 25°C was high. In the measurement results, the value of the electrical conductivity was lower outside the above range. It was speculated that, when the hydrogen content a was less than 0.9, the electrical conductivity decreased because a chemical reaction for promoting sintering was weak. In addition, it was speculated that, when the hydrogen content a was larger than 2.2, the electrical conductivity decreased because the crystallinity of LLZ largely decreased based on XRD measurement results.

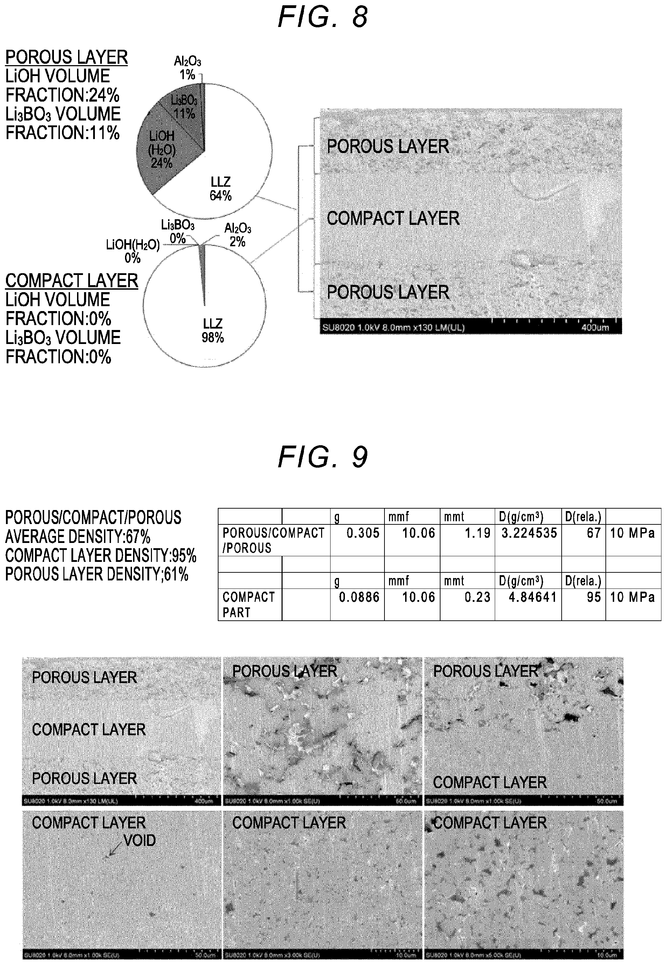

Next, the production of a composite structure of porous layer/compact layer/porous layer was examined. The composite structure was produced by gradually mixing LiOH as a sintering aid. First, 64 volume% of LLZHCN particles, 11 volume% of LBO as a sintering aid, 24 volume% of LiOH, and 1 volume% of Al₂O₃ particles as an additive were weighed out and mixed to form a layer form (second layer). The thickness of the second layer was 400 µm. Next, 98 volume% of LLZ-HCN particles, and 2 volume% of Al₂O₃ particles as an additive were weighed out and mixed to form a layer form (first layer) on the second layer. The thickness of the first layer was 400 µm. The second layer was additionally formed on the first layer to form a laminate (Experimental Example 3). The laminate was fired in the air at 800°C at which chemical sintering occurred for 24 hours. During firing, LiOH and LBO present in the second layer diffused to the side of the first layer, and sintering was promoted. FIG. 8 shows a raw material volume fraction of the composite structure of porous layer/compact layer/porous layer and an SEM image after sintering. As shown in the SEM image in FIG. 8, it was possible to produce the composite structure of porous layer/compact layer/porous layer. Next, the porous layer of the obtained composite structure was cut out, and the density was determined from the volume and the mass. In addition, the compact layer was cut out, and the density was determined from the volume and the mass. Then, the true density of LLZ-CN was set as 100%, and the relative density of the porous layer and the compact layer was determined. FIG. 9 shows details of the SEM image of the composite structure of porous layer/compact layer/porous layer. As shown in FIG. 9, in the composite structure of Experimental Example 3, the average relative density was 67%, the relative density of the porous layer was 61%, and the relative density of the compact layer was 95%. In addition, the electrical conductivity of Experimental Example 3 at 25°C was 2.4×10⁻⁴ S/cm.

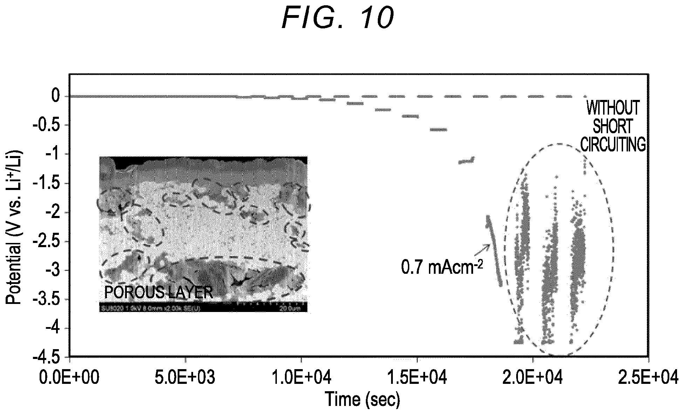

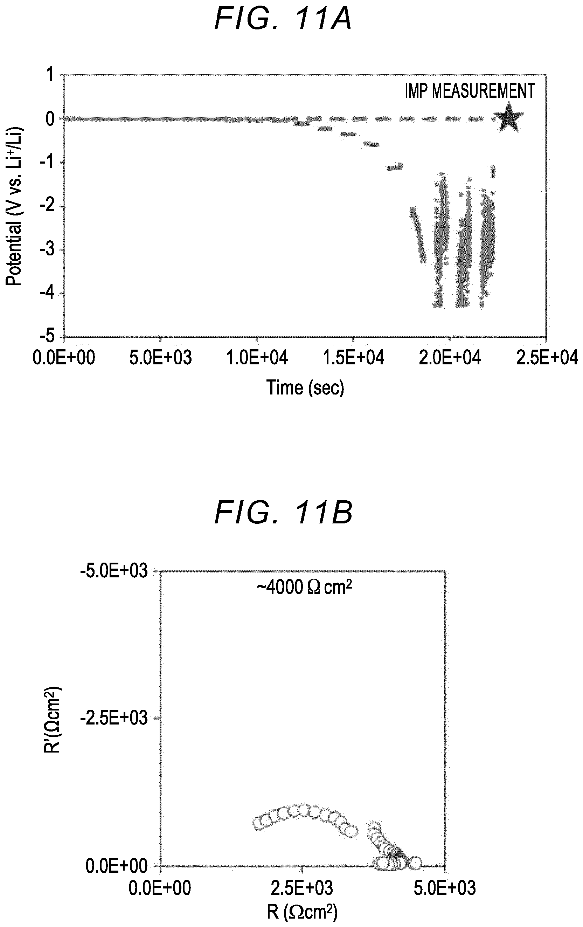

Next, a symmetric cell was produced using the composite structure of Experimental Example 3, and a Li dissolution precipitation test was performed. FIG. 10 shows results of a dissolution precipitation test for the composite structure of porous layer/compact layer/porous layer. As shown in FIG. 10, no internal short circuiting was confirmed. In addition, when a current per unit area exceeded 0.7 mA/cm², a trend of increasing resistance was confirmed. As shown in the SEM image of the cross section of the composite structure after the test, this was speculated that the metal Li was precipitated in voids of the porous layer. That is, it was speculated that the porous layer absorbed the precipitated metal Li and structural destruction of the composite structure or the like could be reduced. In addition, the impedance of the composite structure subjected to the Li dissolution precipitation test was measured. FIGS. 11A and 11B show results of impedance measurement of the composite structure subjected to the Li dissolution precipitation test. As shown in FIGS. 11A and 11B, a large resistance assumed to be caused by Li dissolution was confirmed, but short circuiting was not confirmed. In this manner, it was found that, in the composite structure of porous layer/compact layer/porous layer, when a precipitation field in which a metal was precipitated was secured in the porous layer and the compact layer for preventing short circuiting was integrally formed with the porous layer, it was possible to achieve both ion conductivity and short circuiting prevention.

Here, the composite structure, the lithium battery and the method of producing a composite structure of the present disclosure are not limited to the above examples, and can be implemented in various forms within the technical scope of the present disclosure as long as they are embraced by the scope of the independent claims.

The present disclosure can be used in the technical field of the battery industry.

## Claims

1. An all-solid state lithium battery, comprising:
a positive electrode (12) containing a positive electrode active material;
a negative electrode (15) containing a negative electrode active material; and
a composite structure interposed between the positive electrode (12) and the negative electrode (15);
wherein the composite structure comprises:
a compact layer (21) made of a solid electrolyte; and
a porous layer (22) which contains the solid electrolyte and is integrally formed with the compact layer (21) without having a bonding interface,
wherein
at least one of the compact layer (21) and the porous layer (22) contains a sintering aid, and
the porous layer (22) has a relative density as defined in the description in a range of 40% or more and 60% or less.

2. The all-solid state lithium battery according to claim 1,
wherein the solid electrolyte is a garnet oxide containing at least Li, La, and Zr.

3. The all-solid state lithium battery according to claim 2,
wherein the solid electrolyte is the garnet oxide represented by a basic composition (Li_{7-3x+y-z}Mₓ)(La_{3-y}A_{y})(Zr_{2-z}T_{z})O₁₂,
and M is one or more of Al and Ga, A is one or more of Ca and Sr, T is one or more of Nb and Ta, and 0≤x≤0.2, 0≤y≤0.2, and 0≤z≤2 are satisfied.

4. The all-solid state lithium battery according to any one of claims 1 to 3,
wherein the compact layer (21) has a relative density as defined in the description of 90% or more.

5. The all-solid state lithium battery according to any one of claims 1 to 4,
wherein the compact layer (21) has a thickness in a range of 2 µm or more and 300 µm or less, and
wherein the porous layer (22) has a thickness in a range of 2 µm or more and 100 µm or less.

6. The all-solid state lithium battery according to any one of claims 1 to 5,
wherein, in the composite structure, the compact layer (21) is arranged on a side of the positive electrode (12), and the porous layer (22) is arranged on a side of the negative electrode (15).

7. A method of producing a composite structure, comprising:
a laminating process in which a first layer in which a hydrogen-containing solid electrolyte powder is filled and a second layer in which a powder obtained by mixing hydrogen-containing solid electrolyte particles and an alkali hydroxide is filled are formed to obtain a laminate; and
a firing process in which the laminate is fired at a temperature at which the hydrogen-containing solid electrolyte and the alkali hydroxide are chemically sintered;
wherein, in the laminating process, the first layer is formed using the hydrogen-containing solid electrolyte that is a garnet oxide containing at least Li, H, La and Zr, and the second layer is formed using the hydrogen-containing solid electrolyte that is a garnet oxide containing at least Li, H, La and Zr and the alkali hydroxide that is lithium hydroxide, and
wherein, in the laminating process, the hydrogen-containing solid electrolyte represented by a basic composition (Li_{7-3x+y-z-a}HₐM_{X})(La_{3-y}A_{y})(Zr_{2-z}T_{z})O₁₂ is used,
and M is one or more of Al and Ga, A is one or more of Ca and Sr, T is one or more of Nb and Ta, and 0≤x≤0.2, 0≤y≤0.2, 0≤z≤2, and 0.9≤a≤2.2 are satisfied, and wherein, in the laminating process, in at least one of the first layer and the second layer, 20 volume% or less of lithium borate with respect to a volume of the hydrogen-containing solid electrolyte is used.

8. The method of producing a composite structure according to claim 7,
wherein, in the laminating process, the first layer having a thickness in a range of 2 µm or more and 300 µm or less is formed, and the second layer having a thickness in a range of 2 µm or more and 100 µm or less is formed.

9. The method of producing a composite structure according to claim 7 or 8,
wherein the second layer is formed on the first surface and the second surface of the first layer, in such an order that a laminate of second layer/first layer/second layer is produced.

## Patentansprüche

1. Festkörper-Lithiumbatterie, umfassend:
eine Positivelektrode (12), die ein Positivelektrodenaktivmaterial enthält;
eine Negativelektrode (15), die ein Negativelektrodenaktivmaterial enthält; und
eine Verbundstruktur, die zwischen der Positivelektrode (12) und der Negativelektrode (15) angeordnet ist;
wobei die Verbundstruktur umfasst:
eine kompakte Schicht (21) aus einem Festelektrolyten; und
eine poröse Schicht (22), die den Festelektrolyten enthält und integral mit der kompakten Schicht (21) ausgebildet ist, ohne eine Verbindungsgrenzfläche aufzuweisen,
wobei
mindestens eine aus der kompakten Schicht (21) und der porösen Schicht (22) ein Sinterhilfsmittel enthält, und
die poröse Schicht (22) eine relative Dichte, wie in der Beschreibung definiert, in einem Bereich von 40% oder mehr und 60% oder weniger aufweist.

2. Festkörper-Lithiumbatterie nach Anspruch 1,
wobei der Festelektrolyt ein Granatoxid ist, das mindestens Li, La und Zr enthält.

3. Festkörper-Lithiumbatterie nach Anspruch 2,
wobei der Festelektrolyt das Granatoxid ist, das durch eine Grundzusammensetzung (Li_{7-3x+y-z}Mₓ)(La_{3-y}A_{y})(Zr_{2-z}T_{z})O₁₂ dargestellt ist,
und M eines oder mehrere aus Al und Ga ist, A eines oder mehrere aus Ca und Sr ist, T eines oder mehrere aus Nb und Ta ist, und 0≤x≤0,2, 0≤y≤0,2 und 0≤z≤2 erfüllt sind.

4. Festkörper-Lithiumbatterie nach einem der Ansprüche 1 bis 3,
wobei die kompakte Schicht (21) eine relative Dichte, wie in der Beschreibung definiert, von 90% oder mehr aufweist.

5. Festkörper-Lithiumbatterie nach einem der Ansprüche 1 bis 4,
wobei die kompakte Schicht (21) eine Dicke in einem Bereich von 2 µm oder mehr und 300 µm oder weniger aufweist, und
wobei die poröse Schicht (22) eine Dicke in einem Bereich von 2 µm oder mehr und 100 µm oder weniger aufweist.

6. Festkörper-Lithiumbatterie nach einem der Ansprüche 1 bis 5,
wobei in der Verbundstruktur die kompakte Schicht (21) auf einer Seite der Positivelektrode (12) angeordnet ist und die poröse Schicht (22) auf einer Seite der Negativelektrode (15) angeordnet ist.

7. Verfahren zur Herstellung einer Verbundstruktur, umfassend:
einen Laminierprozess, bei dem eine erste Schicht, in die ein wasserstoffhaltiges Festelektrolytpulver gefüllt ist, und eine zweite Schicht, in die ein Pulver gefüllt ist, das durch Mischen von wasserstoffhaltigen Festelektrolytteilchen und einem Alkalihydroxid erhalten ist, gebildet werden, um ein Laminat zu erhalten; und
ein Brennverfahren, bei dem das Laminat bei einer Temperatur gebrannt wird, bei der der wasserstoffhaltige Festelektrolyt und das Alkalihydroxid chemisch gesintert werden;
wobei in dem Laminierprozess die erste Schicht unter Verwendung des wasserstoffhaltigen Festelektrolyten gebildet wird, der ein Granatoxid ist, das mindestens Li, H, La und Zr enthält, und die zweite Schicht unter Verwendung des wasserstoffhaltigen Festelektrolyten, der ein Granatoxid ist, das mindestens Li, H, La und Zr enthält, und des Alkalihydroxids, das Lithiumhydroxid ist, gebildet wird, und
wobei in dem Laminierprozess der wasserstoffhaltige Festelektrolyt, der durch eine Grundzusammensetzung (Li_{7-3x+y-z-a}HₐM_{X})(La_{3-y}A_{y})(Zr_{2-z}T_{z})O₁₂ dargestellt ist, verwendet wird,
und M eines oder mehrere aus Al und Ga ist, A eines oder mehrere aus Ca und Sr ist, T eines oder mehrere aus Nb und Ta ist, und 0≤x≤0,2, 0≤y≤0,2, 0≤z≤2 und 0,9≤a≤2,2 erfüllt sind, und wobei in dem Laminierprozess in mindestens einer aus der ersten Schicht und der zweiten Schicht 20 Volumen-% oder weniger Lithiumborat in Bezug auf ein Volumen des wasserstoffhaltigen Festelektrolyten verwendet wird.

8. Verfahren zur Herstellung einer Verbundstruktur nach Anspruch 7,
wobei in dem Laminierprozess die erste Schicht mit einer Dicke in einem Bereich von 2 µm oder mehr und 300 µm oder weniger gebildet wird und die zweite Schicht mit einer Dicke in einem Bereich von 2 µm oder mehr und 100 µm oder weniger gebildet wird.

9. Verfahren zur Herstellung einer Verbundstruktur nach Anspruch 7 oder 8,
wobei die zweite Schicht auf der ersten Oberfläche und der zweiten Oberfläche der ersten Schicht in einer solchen Reihenfolge gebildet wird, dass ein Laminat aus zweiter Schicht/erster Schicht/zweiter Schicht erzeugt wird.

## Revendications

1. Batterie au lithium tout solide, comprenant :
une électrode positive (12) contenant un matériau actif d'électrode positive ;
une électrode négative (15) contenant un matériau actif d'électrode négative ; et
une structure composite interposée entre l'électrode positive (12) et l'électrode négative (15) ;
dans laquelle la structure composite comprend :
une couche compacte (21) composée d'un électrolyte solide ; et
une couche poreuse (22) qui contient l'électrolyte solide et est intégralement formée avec la couche compacte (21) sans avoir une interface de liaison,
dans laquelle
au moins une parmi la couche compacte (21) et la couche poreuse (22) contient un auxiliaire de frittage, et
la couche poreuse (22) a une densité relative telle que définie dans la description dans une plage de 40 % ou plus et 60 % ou moins.

2. Batterie au lithium tout solide selon la revendication 1,
dans laquelle l'électrolyte solide est un oxyde de grenat contenant au moins Li, La et Zr.

3. Batterie au lithium tout solide selon la revendication 2,
dans laquelle l'électrolyte solide est l'oxyde de grenat représenté par une composition basique (Li_{7-3x+y-z}Mx)(La_{3-y}A_{y})(Zr_{2-z}T_{z})O₁₂,
et M est l'un ou plusieurs parmi Al et Ga, A est l'un ou plusieurs parmi Ca et Sr, T est l'un ou plusieurs parmi Nb et Ta, et 0 ≤ x ≤ 0,2, 0 ≤ y ≤ 0,2, et 0 ≤ z ≤ 2 sont satisfaites.

4. Batterie au lithium tout solide selon l'une quelconque des revendications 1 à 3,
dans laquelle la couche compacte (21) a une densité relative telle que définie dans la description de 90 % ou plus.

5. Batterie au lithium tout solide selon l'une quelconque des revendications 1 à 4,
dans laquelle la couche compacte (21) a une épaisseur dans une plage de 2 µm ou plus à 300 µm ou moins, et
dans laquelle la couche poreuse (22) a une épaisseur dans une plage de 2 µm ou plus à 100 µm ou moins.

6. Batterie au lithium tout solide selon l'une quelconque des revendications 1 à 5,
dans laquelle, dans la structure composite, la couche compacte (21) est agencée sur un côté de l'électrode positive (12), et la couche poreuse (22) est agencée sur un côté de l'électrode négative (15).

7. Procédé de production d'une structure composite, comprenant :
un processus de stratification dans lequel une première couche dans laquelle une poudre d'électrolyte solide contenant de l'hydrogène est remplie et une deuxième couche dans laquelle une poudre obtenue en mélangeant des particules d'électrolyte solide contenant de l'hydrogène et un hydroxyde d'alcali est remplie sont formées pour obtenir un stratifié ; et
un processus de cuisson dans lequel le stratifié est cuit à une température à laquelle l'électrolyte solide contenant de l'hydrogène et l'hydroxyde d'alcali sont chimiquement frittés ;
dans lequel, dans le processus de stratification, la première couche est formée à l'aide de l'électrolyte solide contenant de l'hydrogène, qui est un oxyde de grenat contenant au moins Li, H, La et Zr, et la deuxième couche est formée à l'aide de l'électrolyte solide contenant de l'hydrogène, qui est un oxyde de grenat contenant au moins Li, H, La et Zr et l'hydroxyde d'alcali qui est l'hydroxyde de lithium, et
dans lequel, dans le processus de stratification, l'électrolyte solide contenant de l'hydrogène représenté par une composition
basique ((Li_{7-3x+y-z-a}HₐMx)(La₃-_{y}A_{y})(Zr_{2-z}T_{z})O₁₂ est utilisé,
et M est l'un ou plusieurs parmi Al et Ga, A est l'un ou plusieurs parmi Ca et Sr, T est l'un ou plusieurs parmi Nb et Ta, et 0 ≤ x ≤ 0,2, 0 ≤ y ≤ 0,2, 0 ≤ z ≤ 2, et 0,9 ≤ a ≤ 2,2 sont satisfaites, et dans lequel, dans le processus de stratification, dans au moins une parmi la première et la deuxième couche, 20 % en volume ou moins de borate de lithium par rapport à un volume d'électrolyte solide contenant de l'hydrogène sont utilisés.

8. Procédé de production d'une structure composite selon la revendication 7,
dans lequel, dans le processus de stratification, la première couche ayant une épaisseur dans une plage de 2 µm ou plus à 300 µm ou moins est formée, et la deuxième couche ayant une épaisseur dans une plage de 2 µm ou plus à 100 µm ou moins est formée.

9. Procédé de production d'une structure composite selon la revendication 7 ou 8,
dans lequel la deuxième couche est formée sur la première surface et la deuxième surface de la première couche, dans un ordre tel qu'un stratifié de deuxième couche/première couche/deuxième couche est produit.
